# EUROPÄISCHE PATENTSCHRIFT

(11) **EP 0 978 025 B1**
(45) Veröffentlichungstag und Bekanntmachung des Hinweises auf die Patenterteilung: **31.10.2001**
(21) Anmeldenummer: 98925424.8
(22) Anmeldetag: 21.03.1998
(51) Int. Cl.: G06F 1/26

(54) **ELEKTRONISCHE SCHALTUNG**
ELECTRONIC CIRCUIT
CIRCUIT ELECTRONIQUE

(30) Priorität: 23.04.1997 DE 19717012
(43) Veröffentlichungstag der Anmeldung: 09.02.2000
(73) Patentinhaber: ROBERT BOSCH GMBH, 70442 Stuttgart (DE)
(72) Erfinder: WEIGOLD, Thomas, D-76547 Sinzheim (DE); KOCH, Stefan, D-77855 Achern (DE)
(86) Internationale Anmeldenummer: DE9800838
(87) Internationale Veröffentlichungsnummer: WO9848341

(56) Entgegenhaltungen:
- WO-A-97/12346
- US-A- 5 489 809
- US-A- 5 689 715

## Beschreibung

### Stand der Technik

Die Erfindung geht aus von einer elektronischen Schaltung nach der Gattung des unabhängigen Patentanspruchs. Es sind bereits elektronische Schaltungen bekannt, die einen Rechner mit einer Schnittstelle zum Austausch von seriellen Daten aufweisen. Dabei sind Schalter vorgesehen mit denen die Rechner wahlweise mit einem Spannungsanschluß verbunden werden können. Es sind dabei nicht vorgesehen durch Signale am Schnittstellenanschluß den Schalter anzusteuern.

Weiterhin sind Rechner bekannt, die eine serielle Schnittstelle aufweisen und die in einem sogenannten Schlafmodus versetzt werden können. Im Schlafmodus werden Teile des Rechners nicht mehr mit Spannung versorgt, so daß die Stromaufnahme des Rechners in diesem Betriebszustand verringert wird. Durch Signale über die serielle Schnittstelle kann der Rechner dann von dem Schlafmodus wieder in einen aktiven Zustand geschaltet werden. Dabei ist es jedoch erforderlich, daß zumindest Teile des Rechners aktiviert bleiben um die Signale die an dem Schnittstellenanschluß anliegen zu verarbeiten. Derartige Rechner müssen daher auch im Schlafmodus mit einem nichtvernachlässigbaren Ruhestrom versorgt werden.

Die Merkmale im Oberbegriff des Anspruchs 1 sind aus Dokument WO-A-97/12346 bekannt.

### Vorteile der Erfindung

Die elektronische Schaltung mit den kennzeichnenden Merkmalen des unabhängigen Patentanspruchs 1 hat demgegenüber den Vorteil, daß der Rechner durch ein Signal am Schnittstellenanschluß aktiviert werden kann und gleichzeitig der Stromverbrauch im inaktivierten Zustand besonders gering ist. Im inaktiverten Zustand kann so ein Strombedarf von weniger als 300 µA erreicht werden.

Durch die in den Unteransprüchen aufgeführten Maßnahmen sind vorteilhafte Weiterbildungen und Verbesserungen der im unabhängigen Patentanspruch angegebenen elektronischen Schaltung möglich. Durch den zweiten Schalter wird erreicht, daß durch ein einziges Signal an dem Schnittstellenanschluß der Rechner mit dem Spannungsanschluß verbunden wird und nachfolgend verbunden bleibt. Durch die Ausbildung des ersten Schalters als PNP-Transistor läßt sich der Schalter mit seriellen Datenleitungen verwenden die im Ruhezustand High-Pegel aufweisen. Durch die Ausbildung des ersten Schalters als NPN-Transistor läßt sich die Vorrichtung mit seriellen Datenleitungen verwenden die im Ruhezustand einen LOW-Pegel aufweisen. Da der Steueranschluß des zweiten Schalters vom Rechner mit einem Massepotenial verbunden werden kann, kann so durch den Rechner die Stromversorgung für den Rechner wieder beendet werden. Zur spannungsmäßigen Entkopplung des ersten Schalters und zweiten Schalters kann dabei eine Zederndiode verwendet werden. Der Steueranschluß des ersten Schalters und der Schnittstellenanschluß können ebenfalls durch eine Diode von einander getrennt werden, so daß nach dem Schließen des ersten Schalters die Potentiale am Schnittstellenanschluß keine Wirkung mehr auf den Steueranschluß des ersten Schalters haben. Für den Datenaustausch kann eine Schnittstelle im Rechner vorgesehen werden.

### Zeichnungen

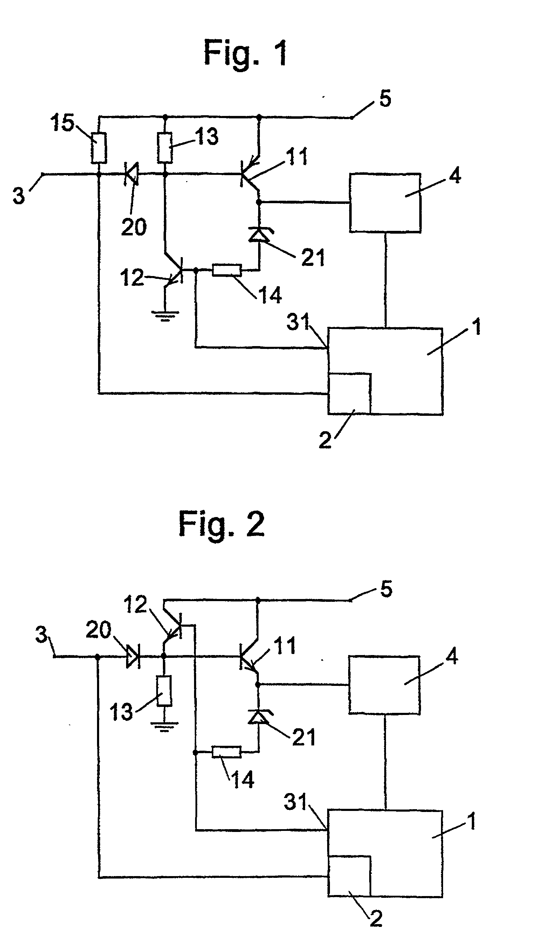

Ausführungsbeispiele der Erfindung sind in den Figuren dargestellt und in der nachfolgenden Beschreibung näher erläutert. Es zeigen die Figur 1 ein erstes und die Figur 2 ein zweites Ausführungsbeispiel der Erfindung.

### Beschreibung

Die Figur 1 zeigt eine elektronische Schaltung mit einem Rechner 1. Dem Rechner 1 ist eine Schnittstelle 2 zugeordnet, die durch eine entsprechende Leitung mit einem Schnittstellenanschluß 3 verbunden ist. Die Schnittstelle 2 enthält die notwendige Hardware zur Kommunikation über Datenleitungen. An dem Schnittstellenanschluß 3 kann eine serielle Datenübertragungsleitung angeschlossen werden. Der Rechner 1 ist durch eine weitere Leitung mit einem Spannungsstabilisator 4 verbunden, der wiederum über einen ersten Schalter 11 mit einem Spannungsanschluß 5 verbunden ist. Am Spannungsanschluß 5 wird eine Versorgungsspannung beispielsweise 12 Volt angelegt, die zur Spannungsversorgung der gesamten elektronischen Schaltung dient. Der Schalter 11 ist hier als PNP-Transistor ausgelegt, wobei der Emitter mit dem Spannungsanschluß 5 und der der Kollektor mit der Spannungsstabilisierung 4 verbunden ist. Bei geschlossenem Schalter 11 ist so die Spannungsstabilisierung 4 mit dem Spannungsanschluß 5 verbunden, so daß der Rechner 1 über die Spannungsstabilisierung 4 mit einer Betriebsspannung bzw. einem Betriebsstrom versorgt wird. Der erste Schalter 11 weist einen als Basis ausgebildeten Steueranschluß auf. Dieser ist über einen ersten Widerstand 13 mit dem Spannungsanschluß 5 verbunden. Weiterhin ist der Spannungsanschluß 5 über einen dritten Widerstand 15 mit dem Schnittstellenanschluß 3 verbunden. Weiterhin ist die Basis des PNP-Transistors 11 mit der Anode einer Diode 20 verbunden. Die Kathode der Diode 20 ist mit dem Schnittstellenanschluß 3 verbunden. Weiterhin ist noch ein zweiter Schalter 12 vorgesehen, der hier als NPN-Transistor ausgebildet ist. Der NPN-Transistor 12 ist mit seinem Emitter mit einem Masseanschluß verbunden. Der Kollektor des NPN-Transistors 12 ist mit dem Basisanschluß des PNP-Transistors 11 verbunden. Die Basis des NPK-Transistors 12 ist über einen Widerstand 14 mit der Anode einer Zener Diode 21 verbunden. Die Kathode der Zener Diode 21 ist mit dem Kollektor des PNP-Transistor 11 verbunden. Weiterhin ist die Basis des NPN-Transistors 12 mit einem Ausgang 31 des Rechners 1 verbunden.

Zur Beschreibung der Funktion der Schaltung der Figur 1 wird zunächst davon ausgegangen, daß an den Spannungsanschluß eine positive Betriebsspannung angelegt wird und am Schnittstellenanschluß 3 keine weiteren Spannungen angelegt werden. Über den ersten Widerstand 13 wird dann die Basis des PNP-Transistors 11 mit einer positiven Spannung beaufschlagt, so daß der PNP-Transistor 11 sperrt. Die Spannungsstabilisierung 4 wird somit nicht mit einer Betriebsspannung versorgt, so daß auch für den Rechner 1 keine Betriebsspannung bereit steht. In diesem Zustand ist der Stromverbrauch der in der Figur 1 gezeigten Schaltung besonders gering, da im wesentlichen nur parasitäre Ströme fließen können. Über den Widerstand 15 wird auch der Schnittstellenanschluß 3 auf der positiven Versorgungsspannung des Spannungsanschlußes 5 gehalten, sofern die Schaltung über den Schnittstellenanschluß 3 nicht mit anderem elektronischen Schaltungen verbunden ist, die den Schnittstellenanschluß 3 auf ein anderes Potential ziehen. Da die Widerstände 13 und 15 die Aufgabe haben, die Basis des PNP-Transistors 11 bzw. den Schnittstellenanschluß 3 auf einem höheren Potential zu halten, werden diese in der Regel auch als Pull-Up-Widerstände bezeichnet. Die Widerstände sind dabei so ausgelegt, daß durch eine niederohmige Verbindung mit Masse die Basis des PNP-Transistors 11 bzw. der Schnittstellenanschluß 3 auf ein geringeres Potential gezogen werden können. Nach einem ersten Anlegen einer positiven Versorgungsspannung am Spannungsanschluß 5 befindet sich die Schaltung nach der Figur 1 somit zunächst in einem Ruhezustand bei dem der Rechner 1 nicht mit Versorgungsspannung versorgt wird und somit nur geringe Ströme fließen.

Um den Rechner 1 zu aktivieren kann, beispielsweise von einer weiteren hier nicht gezeigten Schaltung, der Schnittstellenanschluß 3 niederohmig mit Masse verbunden werden. Über die Diode 20 wird dann dieses Potential auch an die Basis des PNP-Transitors 11 angelegt, so daß dieser Transitor vom gesperrten Zustand in den Durchlassbetrieb übergeht. Der durch den PNP-Transitor 11 geschaffene erste Schalter wird somit von einem geöffneten Zustand in einen geschlossenen Zustand geändert, so daß dann die Spannungsstabilisierung 4 über den nun geschlossenen Schalter 11 mit dem Spannungsanschluß 5 verbunden ist. Die Spannungsstabilisierung 4 stellt dann eine Betriebsspannung für den Rechner 1 zur Verfügung, so daß dieser dann aktiviert wird. Über die Zener Diode 21 und dem zweiten Widerstand 14 liegt dann natürlich die positive Betriebsspannung-des Spannungsanschlußes 5 auch an der Basis des NPN-Transistors 12 an, so daß auch dieser Transistor vom Sperrzustand in den Durchlassbetrieb gebracht wird. Der durch den NPN-Transistor 12 gebildete Schalter 12 wird somit ebenfalls von einem geöffneten Zustand in einen geschlossenen Zustand gebracht, wodurch er die Basis des PHP-Transistors 11, d.h. der Steueranschluß des Schalters 11 niederohmig mit einem Maßeanschluß verbunden wird. Der zweite Schalter 12 bewirkt somit eine Selbsthaltung, d.h. nachdem der Schalter 11 einmalig geschlossen wurde, wird durch Schalter 12 gewährleistet, daß dieser Zustand auch bestehen bleibt unabhängig davon, welches elektrische Potenial im weiteren zeitlichen Verlauf am Schnittstellenanschluß 3 anliegt. Durch die Diode 20 wird dabei gewährleistet, daß trotz der niederohmigen Verbindung der Basis des PNP-Transistors 11 mit Masse jedes beliebige Potential am Schnittstellenanschluß 3 anliegen kann. Die Schaltung nach der Figur 1 kann somit durch ein einmaliges Signal am Schnittstellenanschluß 3 in einen betriebsbereiten Zustand gebracht werden. Durch die Verwendung eines PNP-Transistors 11 als ersten Schalter ist dabei die elektronische Schaltung zu Verwendung mit einem seriellen Datenbus vorgesehen, bei dem der Ruhezustand der Datenleitung durch ein High-Potential gegeben ist. Nachrichten bestehen dann darin, daß die Datenleitung bitweise in einen Low-Zustand versetzt werden. Im vorliegenden Fall besteht das Low-Potential beispielsweise aus einer Verbindung zu einem Masseanschluß. Die so gebildete elektronische Schaltung ist somit nach dem Einschalten, d.h. nach dem Anliegen einer Versorgungsspannung zunächst in einem Ruhezustand wobei die Stromaufnahme ausserordentlich gering ist, da nur parasitäre Ströme fließen. Es kann so ein Ruhestrom von weniger als 300 µA realisiert werden. Durch ein einfaches Signal auf der seriellen Datenleitung kann die Schaltung dann in betriebsbereiten Zustand gebracht werden. Wichtig ist dabei auch, daß keine weiteren Anschlüße zur Aktivierung benötigt werden, sondern daß ein Anschluß für die serielle Datenleitung für das Aktivierungssignal gleichzeitig benutzt werden kann.

Weiterhin kann es auch noch wünschenswert sein, die bereits aktivierte Schaltung wieder in einen inaktiven Zustand zu bringen. Dazu weist der Rechner 1 einen Ausgang 31 auf, der vom Rechner 1 mit Massepotential beaufschlagt werden kann. Da dieser Anschluß 31 durch eine entsprechende Leitung mit der Basis des NPN-Transistors 12 verbunden ist, kann der Rechner 1 so den Schalter 12 wieder schließen. Da dann die niederohmige Verbindung mit Masse nicht mehr besteht, wird die Basis des PNP-Transistors 11 wieder über den Pull-up-Widerstand 13 auf das positive Versorgungspotential am Spannungsanschluß 5 gezogen. Durch den Widerstand 14 bzw. die Zener Diode 21 mit einem typischen Schaltpunkt von 5 Volt wird dabei sichergestellt, daß das Öffnen des Schalters 12 und des Schalters 11 zuverlässig erfolgt. Dies erfolgt dadurch, daß eine spannungsmäßige Entkopplung zwischen den beiden Schaltung durch die Zener Diode 21 sichergestellt wird. Es wird so erreicht, daß der Schalter 12 bereits vollständig geöffnet ist bevor der Rechner 1 durch den Schalter 11 von der Versorgungsspannung am Spannungsanschluß 5 getrennt wird. Es könnte sonst zu einem wiederholten Aus-und Einschalten d.h. zu einer Schwingung kommen. Alternativ ist es auch möglich, daß die Spannungstabilisierung 4 Speicherelemente, beispielsweise Kondensatoren enthält die auch nach dem Öffnen des Schalters 11 die Betriebsbereitschaft des Rechners 1 noch für eine kurze Zeit aufrecht erhalten. Auch in diesem Fall könnte dann der Rechner 1 vom Spannungsanschluß 5 getrennt werden ohne daß dazu die Zener Diode 21 erforderlich ist.

In der Figur 2 wird ein weiteres Ausführungsbeispiel gezeigt welches für Datenleitungen geeignet ist deren Ruhezustand ein Low-Potential oder Massepotential ist und die dann durch bitweises Anlegen von High-Spannungen Daten übertragen. Der Rechner 1, die Schnittstelle 2, der Schnittstellenanschluß 3, die Spannungsstabilisierung 4 und der Spannungsanschluß 5 entsprechen den bereits bekannten Bauteilen aus der Figur 1. Der erste Schalter 11 ist hier als NPN-Transistor ausgebildet und mit seinem Kollektor mit dem Spannungsanschluß 5 mit seinem Emitter mit der Spannungsstabilisierung 4 und mit seinem Basisanschluß mit der Kathode einer Diode 20 verbunden. Die Anode der Diode 20 ist mit dem Schnittstellenanschluß 3 verbunden. Weiterhin ist die Basis des NPN-Transistors 11 über einen Widerstand 13 mit einem Masseanschluß verbunden. Als zweiter Schalter ist hier ein NPN-Transistor 12 vorgesehen dessen Kathode mit dem Spannungsanschluß 5 und dessen Emitter mit dem Basisanschluß des NPN-Transistors 11 verbunden ist. Die Basis des NPN-Transistors 12 ist wieder mit einem Anschluß 31 des Rechners 1 verbunden. Weiterhin ist die Basis des Transistors 12 über einen Widerstand 14 mit der Anode einer Zener-Diode 21 verbunden. Die Kathode der Zener Diode 21 ist mit dem Emitter des Transistors 11 verbunden.

Wie zu erkennen ist, sind keine Pull-up-Widerstände vorgesehen, so daß nach dem Anlegen einer Spannung am Spannungsanschluß 5 der erste Schalter 11 zunächst geschlossen bleibt, solange wie auch am Schnittstellenanschluß 3 keine positive Spannung angelegt ist. Diese entspricht dem inaktiven Zustand der Schaltung. Wenn der Schnittstellenanschluß 3 kurzzeitig mit einem positiven Potential beaufschlagt wird, so wird der Schalter 11 geschlossen und die Spannungsstabilisierung 4 mit dem Spannungsanschluß 5 verbunden. Weiterhin wird dann die Basis des Transistors 12 ebenfalls mit einer positiven Spannung beaufschlagt, so daß dann der Schalter 12 geschlossen wird. Dadurch wird dann der Basisanschluß des Schalters 11 niederohmig mit der Versorgungsspannung 5 beaufschlagt, so daß der Einschaltzustand gehalten wird. Durch Anlegen des Massepotential am Anschluß 31 des Rechners 1 kann sich der Rechner dann wieder vom Spannungsanschluß 5 abkoppeln. Die Dioden 20 und 21 dienen wieder zur spannungsmäßigen Entkopplung.

## Patentansprüche

1. Elektronische Schaltung mit einem Rechner 1, einem Spannungsanschluß 5, einem Schnittstellenanschluß 3 und einem ersten Schalter 11, wobei der erste Schalter 11 elektrisch zwischen dem Rechner 1 und dem Spannungsanschluß 5 angeordnet ist, wobei der Rechner 1 über dem Schnittstellenanschluß 3 seriell Daten austauschen kann, wobei der erste Schalter 11 als steuerbarer Schalter mit einem Steueranscbluß ausgebildet ist, wobei der Steueranschluß mit dem Schnittstellenanschluß 3 verbunden ist, und wobei der erste Schalter 11 bei einem ersten Potential am Steueranschluß geschlossen und bei einem zweiten Potential am Steueranschluß geöffnet ist, **dadurch gekennzeichnet, daß** der Steueranschluß des ersten Schalter 11 über einen ersten Widerstand 13 mit dem ersten Potential verbunden ist und über einen zweiten Schalter 12 mit dem zweiten Potenial verbindbar ist, daß der zweite Schalter 12 als steuerbarer Schalter mit einem Steueranschluß ausgebildet ist, und daß bei geöffnetem ersten Schalter 11 ein Potential an den Steueranschluß des zweiten Schalters 12 anlegbar ist, durch das der zweite Schalter 12 geöffnet bleibt.

2. Schaltung nach Ansprüch 1, **dadurch gekennzeichnet, daß** der erste Schalter 11 als PNP-Transistor und der zweite Schalter 12 als NPN-Transistor ausgebildet ist, daß der Emitter des PNP-Transistors mit dem Spannungsanschluß 5 und der Kollektor des PNP-Transistors über einen zweiten Widerstand mit der Basis des NPN-Transistors verbunden ist, daß der NPN-Transistor mit seinem Emitter mit einem Masseanschluß und mit seinem Kollektor mit dem Steueranschluß des PNP-Transistors verbunden ist.

3. Schaltung nach Anspruch 1, **dadurch gekennzeichnet, daß** der erste Schalter 11 und der zweite Schalter 12 als NPN-Transistoren ausgebildet sind, daß der erste Schalter 11 mit seinem Emitter mit dem Spannungsanschluß 5 und mit seinem Kollektor über einen zweiten Widerstand mit der Basis des zweiten Schalters 12 verbunden ist, und daß der zweite Schalter 12 mit seinem Kollektor mit dem Spannungsanschluß und mit seinem Emitter über den ersten Widerstand 13 mit einem Masseanschluß verbunden ist.

4. Schaltung nach Anspruch 2 bis 3, **dadurch gekennzeichnet, daß** der Steueranschluß des zweiten Schalters 12 mit einem Ausgang 31 des Rechners 1 verbunden ist und daß der Ausgang 31 des Rechners 1 vom Rechner 1 auf eine Massepotential legbar ist.

5. Schaltung nach Anspruch 4, **dadurch gekennzeichnet, daß** zwischen dem ersten Schalter 11 und dem zweiten Widerstand 14 eine Zener Diode geschaltet ist, wobei die Anode der Zener Diode 21 mit dem zweiten Widerstand und die Kathode der Zener Diode 21 mit dem ersten Schalter verbunden ist.

6. Schaltung nach einem der vorhergehenden Ansprüche, **dadurch gekennzeichnet, daß** zwischen dem Steueranschluß des ersten Schalter 11 und dem Schnittstellenanschluß 3 eine Diode 20 geschaltet ist.

7. Schaltung nach einem der vorhergehenden Ansprüche, **dadurch gekennzeichnet, daß** der Rechner 1 eine Schnittstelle 2 aufweist, die mit dem Schnittstellenanschluß 3 verbunden ist.

## Claims

1. Electronic circuit having a computer 1, a voltage connection 5, an interface connection 3 and a first switch 11, the first switch 11 being electrically arranged between the computer 1 and the voltage connection 5, the computer 1 being able to exchange data serially via the interface connection 3, the first switch 11 being designed as a controllable switch with a control connection, the control connection being connected to the interface connection 3, and the first switch 11 being closed in the event of a first potential at the control connection and being open in the event of a second potential at the control connection, **characterized in that** the control connection of the first switch 11 is connected to the first potential via a first resistor 13 and can be connected to the second potential via a second switch 12, **in that** the second switch 12 is designed as a controllable switch with a control connection, and **in that**, with the first switch 11 open, a potential can be applied to the control connection of the second switch 12, by means of which the second switch 12 remains open.

2. Circuit according to Claim 1,
**characterized in that** the first switch 11 is designed as a PNP transistor and the second switch 12 as an NPN transistor, **in that** the emitter of the PNP transistor is connected to the voltage connection 5 and the collector of the PNP transistor is connected via a second resistor to the base of the NPN transistor, **in that** the NPN transistor is connected to an earth connection by its emitter and to the control connection of the PNP transistor by its collector.

3. Circuit according to Claim 1, **characterized in that** the first switch 11 and the second switch 12 are designed as NPN transistors, **in that** the first switch 11 is connected to the voltage connection 5 by its emitter and, via a second resistor, to the base of the second switch 12 by its collector, and **in that** the second switch 12 is connected to the voltage connection by its collector and, via the first resistor 13, to an earth connection by its emitter.

4. Circuit according to Claims 2 to 3, **characterized in that** the control connection of the second switch 12 is connected to an output 31 of the computer 1, and **in that** the output 31 of the computer 1 can be put at an earth potential by the computer 1.

5. Circuit according to Claim 4, **characterized in that** a Zener diode is connected between the first switch 11 and the second resistor 14, the anode of the Zener diode 21 being connected to the second resistor and the cathode of the Zener diode 21 being connected to the first switch.

6. Circuit according to one of the preceding claims, **characterized in that** a diode 20 is connected between the control connection of the first switch 11 and the interface connection 3.

7. Circuit according to one of the preceding claims, **characterized in that** the computer 1 has an interface 2, which is connected to the interface connection 3.

## Revendications

1. Circuit électronique comprenant un calculateur (1), une borne de tension (5), un branchement d'interface (3) et un premier interrupteur (11),
le premier interrupteur (11) étant monté électriquement entre le calculateur (1) et la borne de tension (5),
le calculateur (1) échangeant des données-séries par le branchement d'interface (3), le premier interrupteur (11) étant un interrupteur commandé ayant une borne de commande reliée au branchement d'interface (3), et
le premier interrupteur (11) étant fermé pour un premier potentiel appliqué à la borne de commande et ouvert par un second potentiel appliqué à la borne de commande,
**caractérisé en ce que**
la borne de commande du premier interrupteur (11) est reliée au premier potentiel par une première résistance (13) et peut être reliée par un second interrupteur (12) au second potentiel,
le second interrupteur (12) est un interrupteur commandé avec une borne de commande, et lorsque le premier interrupteur (11) est ouvert, un potentiel est appliqué à la borne de commande du second interrupteur (12) qui maintient ouvert ce second interrupteur (12).

2. Circuit selon la revendication 1,
**caractérisé en ce que**
le premier interrupteur (11) est un transistor PNP et le second interrupteur (12) un transistor NPN,
l'émetteur du transistor PNP est relié à la borne de tension (5) et le collecteur du transistor PNP est relié par une seconde résistance à la base du transistor NPN, et
le transistor NPN est relié avec son émetteur à la borne de masse et par son collecteur à la borne de commande du transistor PNP.

3. Circuit selon la revendication 1,
**caractérisé en ce que**
le premier interrupteur (11) et le second interrupteur (12) sont des transistors NPN,
le premier interrupteur (11) est relié par son émetteur à la borne de tension (5) et son collecteur est relié par une seconde résistance à la base du second interrupteur (12),
et le second interrupteur (12) est relié avec son collecteur à la borne de tension et avec son émetteur à la masse par l'intermédiaire de la première résistance (13).

4. Circuit selon les revendications 2 et 3,
**caractérisé en ce que**
la borne de commande du second interrupteur (12) est reliée à une sortie (31) du calculateur, et
cette sortie (31) du calculateur peut être mise à la masse.

5. Circuit selon la revendication 4,
**caractérisé par**
une diode Zener branchée entre le premier interrupteur (11) et la seconde résistance (14), l'anode de la diode Zener (21) étant reliée à la seconde résistance et sa cathode, au premier interrupteur.

6. Circuit selon l'une des revendications précédentes,
**caractérisé par**
une diode (20) branchée entre la borne de commande du premier interrupteur (11) et la branchement d'interface (3).

7. Circuit selon l'une quelconque des revendications précédentes,
**caractérisé en ce que**
le calculateur (1) comporte une interface (2) reliée au branchement d'interface (3).
